# EUROPÄISCHE PATENTSCHRIFT

(11) **EP 3 558 775 B1**
(45) Veröffentlichungstag und Bekanntmachung des Hinweises auf die Patenterteilung: **09.12.2020**
(21) Anmeldenummer: 17825778.8
(22) Anmeldetag: 12.12.2017
(51) Int. Cl.: B60T 13/66, B60T 8/17

(54) **VERFAHREN ZUR AUFRECHTERHALTUNG DER SUMMENBREMSKRAFT EINES ZUGES UNTER BERÜCKSICHTIGUNG DER ZUR VERFÜGUNG STEHENDEN KRAFTSCHLUSSVERHÄLTNISSE**
METHOD FOR MAINTAINING TOTAL BRAKING POWER OF A TRAIN WHILE TAKING THE AVAILABLE FRICTION CONDITIONS INTO CONSIDERATION
PROCÉDÉ PERMETTANT DE CONSERVER LA SOMME DES FORCES DE FREINAGE D'UN TRAIN EN PRENANT EN COMPTE LES RAPPORTS D'ADHÉRENCE DISPONIBLES

(30) Priorität: 21.12.2016 DE 102016125193
(43) Veröffentlichungstag der Anmeldung: 30.10.2019
(73) Patentinhaber: KNORR-BREMSE Systeme für Schienenfahrzeuge GmbH, 80809 München (DE)
(72) Erfinder: RASEL, Thomas, 85635 Höhenkirchen-Siegertsbrunn (DE); FRIESEN, Ulf, 85579 Neubiberg (DE); TOMBERGER, Christoph, 80469 München (DE); HERDEN, Marc-Oliver, 81377 München (DE); WACH, Jörg-Johannes, 81247 München (DE); MAYER, Reinhold, 85757 Karlsfeld (DE)
(86) Internationale Anmeldenummer: PCT/EP2017/082362
(87) Internationale Veröffentlichungsnummer: WO 2018/114465

(56) Entgegenhaltungen:
- WO-A1-2013/034694
- DE-A1-102014 102 881
- DE-A1-102014 204 814

## Beschreibung

Um ein Schienenfahrzeug zu beschleunigen oder abzubremsen, müssen Beschleunigungs- (Zug-) oder Bremskräfte am Kontaktpunkt zwischen Rad und Schiene übertragen werden. Die maximale Kraft, die an diesem Kontaktpunkt zwischen Rad und Schiene übertragbar ist, hängt im Wesentlichen von den Reibungsverhältnissen zwischen Rad und Schiene ab. Auf einer trockenen Schiene sind größere Kräfte übertragbar als auf einer nassen oder schmierigen Schiene. Falls beim Bremsen eines Schienenfahrzeugs eine größere Bremskraft angefordert wird, als auf Grund der Reibungsverhältnisse zwischen Rad und Schiene übertragbar ist, kann wenigstens eines der Räder blockieren und über die Schiene rutschen. Dieser Zustand wird als Gleiten bezeichnet. Falls im Gegensatz dazu beim Beschleunigen eines Schienenfahrzeugs eine größere Beschleunigung (Zugkraft) angefordert wird, als auf Grund der Reibungsverhältnisse zwischen Rad und Schiene übertragbar ist, kann wenigstens eines der Räder durchdrehen. Dieser Zustand wird als Schleudern bezeichnet. Anders ausgedrückt beschreibt Schleudern einen Zustand, bei dem die Radumfangsgeschwindigkeit größer ist als die Fahrgeschwindigkeit. Analog dazu beschreibt Gleiten einen Zustand, bei dem die Radumfangsgeschwindigkeit kleiner ist als die Fahrgeschwindigkeit. Falls Radumfangsgeschwindigkeit und Fahrgeschwindigkeit identisch sind, wird dieser Zustand als Rollen bezeichnet.

Allgemein betrachtet wird das Auftreten einer Relativbewegung zwischen Radumfang und Schiene als Schlupf bezeichnet. Wenn also Radumfangsgeschwindigkeit und Fahrgeschwindigkeit nicht identisch sind, liegt folglich Schlupf vor. Schlupf ist des Weiteren notwendig, um überhaupt Zug- oder Bremskräfte zwischen Schiene und Rad übertragen zu können. Wenn an einem Rad ein Schlupf von null vorliegt, bedeutet dies, dass dieses Rad frei rollt, also keine Drehmomente am Rad wirken. Ohne Schlupf ist folglich keine Leistungsübertragung, also keine Übertragung von Zug- oder Bremskräfte zwischen Rad und Schiene möglich. Bei einem sehr großen Schlupf, beispielsweise beim Gleiten oder Schleudern, können gegebenenfalls keine großen Kräfte zwischen Rad und Schiene übertragen werden. Folglich liegt der optimale Schlupf zum Übertragen von maximalen Zug- oder Bremskräften zwischen null (Zustand des Rollens) und einem sehr großen Wert, wie beispielsweise 100 Prozent (Zustand des Gleitens oder Schleuderns).

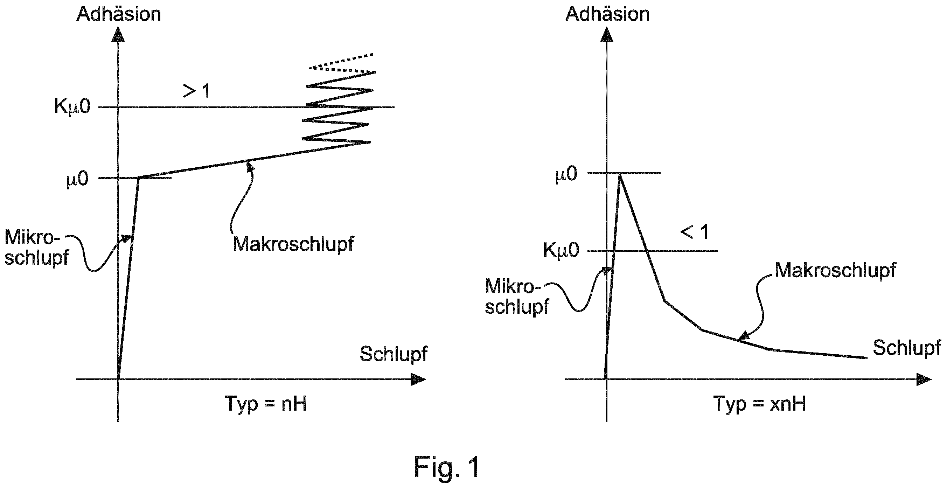

Der optimale Schlupf ist von den Reibungsverhältnissen bzw. von dem Reibungszustand zwischen Rad und Schiene abhängig. Der optimale Schlupf bei nasser Schiene kann demnach ein anderer als bei trockener Schiene sein. Unterschiedliche Reibungsverhältnisse zwischen Rad und Schiene werden nachfolgend als Kraftschlusstypen bezeichnet. Verschiedene Kraftschlusstypen werden exemplarisch in **Fig. 1** veranschaulicht.

Fig. 1 zeigt zwei Diagramme (Kraftschluss bzw. Adhäsion über Schlupf) mit verschiedenen Kraftschlusstypen. Das Diagramm auf der linken Seite zeigt einen Kraftschlusstyp, der in Fachkreisen als nH (niedriger Haftwert) bekannt ist, wobei der auf der rechten Seite gezeigte Kraftschlusstyp als xnH (extrem niedriger Haftwert) bekannt ist. Auf der (horizontalen) x-Achse der Diagramme ist jeweils der Schlupf aufgetragen, während die (vertikale) y-Achse die Adhäsion bzw. die dazu proportionale zwischen Rad und Schiene maximal übertragbare Reibkraft bzw. deren Reibbeiwert zeigt. In den Diagrammen ist des Weiteren ein Wert µ0 eingezeichnet, der in dem Übergangspunkt von Mikroschlupf zu Makroschlupf liegt. Der Teil des Graphen auf der linken Seite von µ0 zeigt jeweils den Bereich des Mikroschlupfs, und der Teil des Graphen auf der rechten Seite von µ0 zeigt jeweils den Bereich des Makroschlupfs. Des Weiteren wird µ0 grundsätzlich durch den maximalen Reibwert im Bereich des Mikroschlupfes (linker Teil des Graphen) definiert.

Bei dem links gezeigten Kraftschlusstyp nH sind maximale Kräfte im Bereich des Makroschlupfes übertragbar, wobei bei dem rechts gezeigten Kraftschlusstyp xnH die maximalen Kräfte im Bereich von µ0 übertragbar sind. Falls beispielsweise eine nH-Kraftschlussbedingung vorliegt (linkes Diagramm in Fig.1), kann ausgehend von µ0 zusätzliche Bremskraft aufgebracht werden, die im Makroschlupfbereich umgesetzt wird, da der Graph ausgehend von µ0 weiterhin ansteigt. Dieses Verhalten wird auch als "Self-Improvement" bezeichnet. Falls im Gegensatz dazu xnH-Kraftschlussbedingungen vorliegen, dann kann in einem Bereich zwischen 0 und µ0 die Bremskraft nur bis zu einem maximal festzulegenden Anteil von µ0 erhöht werden, um einen Übergang in den Makroschlupfbereich zu verhindern (denn hier fällt der Graph ausgehend von µ0 wieder ab, es liegt kein "Self-Improvement" vor). Dieser maximal festzulegende Anteil von µ0 ist in den Diagrammen als Kµ0 eingezeichnet und bezieht sich auf µ0. Der Wert Kµ0 stellt folglich einen Faktor dar, der auf µ0 referenziert und einen prozentualen Anteil von µ0 angibt, welcher zur Kraftübertragung nutzbar ist, ohne bei einem Kraftschlusstyp xnH einen Übergang in den Makroschlupfbereich fürchten zu müssen. Für den Kraftschlusstyp nH (linkes Diagramm in Fig.1) ergibt sich ein Kµ0>1, wohingegen sich für den Kraftschlusstyp xnH (rechtes Diagramm in Fig.1) ein Kµ0<1 ergibt. Falls beispielsweise bei einem Kraftschlusstyp xnH 80 % (=0,8) von µ0 beim Bremsen nutzbar sein soll, um 20 % "Sicherheitsabstand" zum Makroschlupfbereich zu gewährleisten, ergibt sich ein Kµ0 von 0,8.

Im Stand der Technik sind Verfahren und Vorrichtungen zum Umverteilen von Bremskräften zwischen einzelnen Wägen und/oder Achsen eines Schienenfahrzeugs bekannt, falls eine angeforderte Bremskraft auf Grund einer lokalen Einschränkung an einem der gebremsten Wagen und/oder Achse nicht umgesetzt werden kann. Eine solche lokale Einschränkung kann dadurch begründet sein, dass beispielsweise eine Bremsscheibe verglast ist, dass die geforderte Zuspannkraft aus diversen Gründen nicht aufgebracht werden kann, oder dass die Bremsbeläge nicht fachgemäß nachgestellt wurden. In einem solchen Fall ist es aus dem Stand der Technik bekannt, die Bremskräfte statisch umzuverteilen.

Falls allerdings ein gebremstes Rad (oder eine gebremste Achse, oder ein gebremster Wagen) die geforderte Bremskraft auf Grund der Reibungsverhältnisse zwischen Rad und Schiene nicht aufbringen kann, ist hierzu kein Verfahren zum gezielten Umverteilen der Bremskräfte bekannt.

Die DE 10 2014 102 881 A1 beschreibt ein Verfahren und eine entsprechende Vorrichtung zur Steuerung einer Bremsanlage eines Schienenfahrzeugs, wobei die Bremsanlage mehrere Bremseinrichtungen umfasst. Bei einer Bremsung wird die Verzögerung des Schienenfahrzeugs mittels einer mit den Bremseinrichtungen verbundenen gemeinsamen Bremsregelungseinrichtung durch eine entsprechende variable Ansteuerung der Bremseinrichtungen auf eine Sollwertvorgabe geregelt.

Der vorliegenden Erfindung liegt die Aufgabe zu Grunde, ein Verfahren zur Aufrechterhaltung der Summenbremskraft eines Schienenfahrzeugs unter Berücksichtigung der zur Verfügung stehenden Kraftschlussverhältnisse, eine Vorrichtung sowie eine Verwendung hierfür anzubieten, um ein Schienenfahrzeug mit einer geforderten Verzögerung abzubremsen, obwohl grenzwertige Reibungsverhältnisse im Kontaktpunkt von Rad und Schiene vorliegen. Diese Aufgabe wird gelöst durch eine Ausgestaltung gemäß der unabhängigen Ansprüche. Vorteilhafte Weiterbildungen sind Gegenstand der Unteransprüche.

Im Nachfolgenden wird der Begriff der Einheiten verwendet. Unter einer Einheit kann/können ein Rad, eine Achse, mehrere Achsen, ein Drehgestell, ein Wagen, oder mehrere Wägen zusammengefasst sein. Des Weiteren wird nachfolgend ein Zustand beschrieben, in dem bei einer Einheit die Gleitschutzregelung aktiv ist, bzw. dass eine Einheit gleitschutzgeregelt ist. Dies bedeutet, dass bei dieser Einheit der Zustand des Gleitens erkannt wurde, und die Bremskraft daraufhin an dieser Einheit reduziert wird, um das Gleiten an dieser Einheit zu unterbinden. In den Figuren wird außerdem die Abkürzung WSP verwendet, diese steht für "Wheel Slide Protection". Das WSP-System, nachfolgend nur WSP genannt, erkennt den Zustand des Gleitens an einer Einheit und reduziert daraufhin die an dieser Einheit wirkenden Bremskräfte, um den Schlupf zu begrenzen und dadurch außerdem den Zustand des Gleitens bzw. der blockierenden Räder an dieser Einheit zu verhindern. Analog zu der Wirkungsweise des WSP ist aus dem Bereich der Straßenfahrzeuge das Antiblockiersystem (ABS) bekannt.

Des Weiteren werden die in den Ansprüchen erwähnten Funktionen nachfolgend als Graphen bezeichnet und in den Figuren als solche dargestellt, um das beanspruchte Verfahren anschaulich beschreiben zu können. Erfindungsgemäß müssen die Funktionen allerdings nicht als Graphen dargestellt werden, das Verfahren kann vielmehr basierend auf mathematischen Berechnungen ohne graphische Darstellung ausgeführt werden.

Aufbauend auf die obigen Erläuterungen tritt Gleiten grundsätzlich im Bereich des Makroschlupfes auf. Wenn Gleiten an einer Einheit auftritt, und dieses Gleiten durch das WSP erkannt wird, ermittelt das WSP außerdem, welcher Kraftschlusstyp (nH oder xnH, siehe Fig. 1) an dieser Einheit vorliegt.

Wenn nachfolgend ausgeführt wird, dass das WSP an einer Einheit aktiv sei, dann bedeutet dies, dass das WSP an dieser Einheit den Zustand des Gleitens erkannt hat, und daraufhin die Bremskraft an dieser Einheit reduziert, um das Gleiten zubegrenzen.

Des Weiteren wird nachfolgend der Begriff der Summenbremskraft verwendet. Um ein Schienenfahrzeug bis zu einem vorgegebenen Haltepunkt zum Stillstand zu bringen, oder um an einem vorgegebenen Streckenpunkt eine bestimmte verzögerte Geschwindigkeit zu erreichen, muss das Schienenfahrzeug durch eine Gesamt- bzw. Summenbremskraft abgebremst werden. Aus dieser Summenbremskraft ergeben sich die geforderten einzelnen Bremskräfte (Bremsanforderungen bzw. Bremskraftanforderungen) der einzelnen Einheiten. Die Summe der einzelnen Bremskraftanforderungen aller Einheiten ergibt die Gesamt- bzw. Summenbremskraft.

Durch das erfindungsgemäße Verfahren wird ein Absinken der Summenbremskraft aller Einheiten, verursacht durch unzureichende Adhäsions- bzw. Reibungsverhältnisse zwischen Schiene und Rad, durch temporäre Ergänzung von Bremskräften auf bis dahin nicht gleitschutzgeregelten Einheiten verhindert. Gegenüber dem Stand der Technik wird in diesem Zustand potenziell vorhandene zusätzliche Summenbremskraft zur Verfügung gestellt, und gleichzeitig ein Absinken der Summenbremskraft auf Grund von unzureichenden Adhäsions- bzw. Reibungsverhältnissen zwischen Schiene und Rad verhindert.

Erfindungsgemäß wird bei einem Ausführungsbeispiel über alle gleitschutzgeregelten Achsen der Mittelwert von µ0 und Kµ0 gebildet. Auf Basis der gebildeten Mittelwerte von µ0 und Kµ0 wird jeweils ein konstanter Graph für µ0 und Kµ0 gebildet, der jeweils den gebildeten Mittelwert enthält. Folglich kann für jede noch nicht gleitschutzgeregelte Einheit ermittelt werden, ob und wenn ja wieviel zusätzliche Bremskraft umgesetzt werden kann. Diese Einheiten stellen die zusätzliche Bremskraft daraufhin ergänzend zur Verfügung. Das Bilden/Berechnen der Graphen (für die Werte von µ0 und Kµ0) als konstant verlaufende Graphen ist dahingehend vorteilhaft, dass nur eine geringe Rechenleistung hierfür benötigt wird, und die Verläufe der Graphen somit schneller vorliegen. Folglich ist ein extrem kurzes Ansprechverhalten beim Regeln zu erreichen. Erfindungsgemäß werden bei einem weiteren Ausführungsbeispiel die Graphen für µ0 und Kµ0 als eine Funktion ersten Grades, also mit einem linearen Verlauf, gebildet. Das Bilden/Berechnen der Graphen (für die Werte von µ0 und Kµ0) als eine Funktion ersten Grades ist dahingehend vorteilhaft, dass zwar eine etwas höhere Rechenleistung benötigt wird als bei einem konstanten Verlauf, allerdings sich verändernde Reibungsverhältnisse zwischen Rad und Schiene über die gesamte Länge des Schienenfahrzeugs besser berücksichtigt werden können (höherer Granularität). Folglich kann das Regeln der einzelnen Bremskräfte an den einzelnen Einheiten genauer erfolgen.

Erfindungsgemäß werden bei einem weiteren Ausführungsbeispiel die Graphen für µ0 und Kµ0 als eine Funktion wenigstens zweiten Grades gebildet. Hierfür ist, analog zu den vorhergehenden Ausführungen, zwar eine höhere Rechenleistung nötig, allerdings ergibt sich ein noch genauerer Verlauf des Graphen, wodurch eine noch genauere Regelung der einzelnen Bremskräfte an den einzelnen Einheiten ermöglicht wird.

Eine genauere Regelung bedeutet, dass die einzelnen Bremskräfte näher an ihr maximales Bremspotential herangeführt werden, wodurch sich die Summenbremskraft des gesamten Schienenfahrzeugs erhöht.

Erfindungsgemäß fließen bei einem weiteren Ausführungsbeispiel zur Berechnung/Ermittlung der Graphen für µ0 und Kµ0 weitere externe Einflussfaktoren mit ein, wie beispielsweise die Position des Schienenfahrzeugs, die Witterung, die Feuchte, die Geschwindigkeit oder die Fahrtrichtung des Schienenfahrzeugs. Hierdurch können vorab bekannte Einflussfaktoren, die eine Veränderung des Verlaufs der Graphen für µ0 und Kµ0 erwarten lassen, berücksichtigt werden. Dies erfolgt analog zu einer aus der Regelungstechnik bekannten Vorsteuerung.

Sollte eine dynamische Ergänzung der Summenbremskraft durch ein Erhöhen der einzelnen Bremskräfte der einzelnen Einheiten zu einem aktuellen Zeitpunkt nicht möglich sein, so kann in Ergänzung der oben genannten Verfahren der verlorene Bremsweg (Bremskraft über Zeit und Geschwindigkeit) innerhalb des Bremsvorganges nachträglich durch ein Anheben der gesamten Bremskraftanforderung (Summe der Bremskraftanforderung aller Einheiten) erfindungsgemäß ergänzt werden. Der verlorene Weg wird auf Basis der Summenbremskraft unter Berücksichtigung von Geschwindigkeit und Fahrzeugmasse bestimmt, und bestimmt die Kalkulation der ergänzenden Bremsanforderung. Dies erfolgt iterativ, bis der verlorene Bremsweg kompensiert ist.

Erfindungsgemäß kann ein Anpassen der einzelnen Bremsanforderungen hin zu dem jeweiligen Wert der Funktion von Kµ0 sowohl durch ein Anheben als auch durch ein Absenken der einzelnen Bremsanforderungen erfolgen. Hierdurch wird an jeder Einheit eine optimale Bremskraft erreicht.

Alternativ dazu können die einzelnen Bremsanforderungen lediglich dann verändert werden, wenn diese durch das erfindungsgemäße Verfahren erhöht werden. Hierdurch wird sichergestellt, dass die einzelnen Bremsanforderungen keinesfalls abgesenkt werden. Durch eine solche Ausgestaltung wird die Integration des erfindungsgemäßen Verfahrens in ein Bremsregelungssystem vereinfach, da sich allgemeine juristische und insbesondere zulassungsrechtliche Herausforderungen ergeben können, falls das erfindungsgemäße Verfahren bzw. eine erfindungsgemäße Vorrichtung auch dazu eingerichtet ist, einzelne Bremsanforderungen absenken zu können.

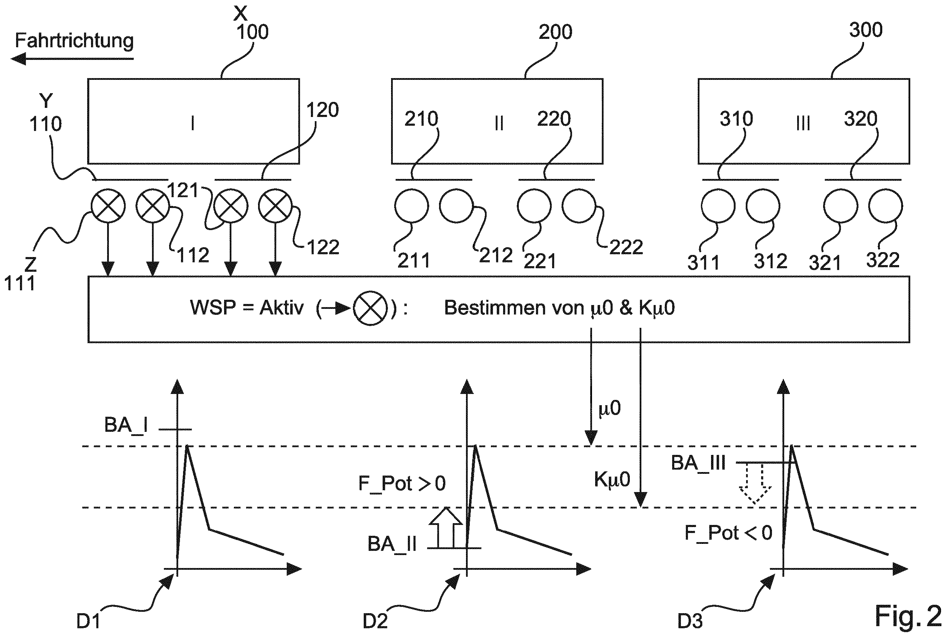

**Fig. 2** zeigt im oberen Bereich ein Schienenfahrzeug mit drei Wägen, nämlich einem Wagen ganz links, einem Wagen in der Mitte, sowie einem Wagen ganz rechts, in einer schematischen Seitenansicht. In diesem Ausführungsbeispiel wird eine Fahrtrichtung des Schienenfahrzeugs nach links angenommen. In diesem Ausführungsbeispiel entspricht außerdem jeweils ein Wagen jeweils einer Einheit. Folglich entspricht der linke Wagen einer Einheit I, der mittlere Wagen einer Einheit II, und der rechte Wagen einer Einheit III. Jeder Wagen I, II, III weist einen als Rechteck dargestellten Aufbau X00 (X=1, 2, 3) auf, wobei unter jedem dieser Aufbauten jeweils zwei Drehgestelle XY0 (Y=1, 2) angeordnet sind, sowie jeweils zwei Achsen XYZ (Z=1, 2) pro Drehgestell Y, von denen jeweils ein Rad in der Seitenansicht sichtbar ist. Die Variable X bezeichnet hierbei den Wagen (erster, zweiter oder dritter, bzw. I, II oder III), die Ziffer Y das Drehgestell (erstes oder zweites Drehgestell des Wagens X), und Z die Achse (erste oder zweite Achse des Drehgestells Y). Die Räder der Achsen XYZ sind hierbei als Kreise dargestellt, und die Drehgestelle XY0 als horizontale Striche über den Rädern bzw. den Achsen XYZ.

Bei Einheit/Wagen I sind die Achsen 111, 112 an das Drehgestell 110 montiert, und die Achsen 121, 122 an das Drehgestell 120. Die Drehgestelle 110, 120 sind des Weiteren an den Aufbau 100 montiert. Die Konfiguration der anderen Einheiten/Wägen II, III verhält sich analog hierzu. In dem hier gezeigten Ausführungsbeispiel umfasst die Einheit I den Aufbau 100, die Drehgestelle 110, 120, sowie die Achsen 111, 112, 121, 122. In einem anderen, nicht gezeigten Ausführungsbeispiel entspricht eine Einheit jeweils einem Drehgestell mit den daran montierten Achsen. In einem weiteren, nicht gezeigten Ausführungsbeispiel entspricht eine Einheit jeweils einer Achse. In einem weiteren, nicht gezeigten Ausführungsbeispiel weist jeder Wagen eine beliebige Anzahl von Drehgestellen mit einer beliebigen Anzahl von daran montierten Achsen auf.

Die Zuordnung der einzelnen Bauteile zu den Einheiten kann den Anforderungen entsprechend festgelegt werden. Wenn eine erhöhte Regelgenauigkeit gewünscht wird, kann eine Einheit jeweils eine Achse umfassen. Um die Granularität und somit auch den Rechenaufwand beim Regeln zu senken, kann eine Einheit jeweils einen Wagen umfassen. Um einen Kompromiss aus Regelgenauigkeit und Rechenaufwand zu erreichen, kann eine Einheit jeweils ein Drehgestell umfassen. Um weitere Vorteile zu erreichen, kann außerdem diese Zuordnung über das gesamte Schienenfahrzeug variieren. Beispielsweise kann eine Einheit lediglich eine Achse und/oder ein Drehgestell umfassen, wobei eine andere Einheit einen gesamten Wagen umfasst. Diese Zuordnungen der einzelnen Bauteile zu den Einheiten kann zeitlich unveränderlich, aber auch zeitlich variabel sein.

Wie bereits erwähnt, umfasst in Fig. 2 jede Einheit I, II, III einen Wagen. Die Räder des Wagens der Einheit I sind mit einem Kreuz markiert, die Räder der Wägen der Einheiten II und III nicht. Ein mit Kreuz markiertes Rad bedeutet, dass die dazugehörige Achse aktuell gleitschutzgeregelt ist, dass an dieser Achse folglich Gleiten vorliegt, die Achse also aktuell über die Schienen rutscht. Da die Einheit I den gesamten ersten Wagen umfasst, also auch alle Achsen 111, 112, 121, 122, kann nur Gleiten an der gesamten Einheit I, also an allen oben genannten Achsen, erkannt werden. Wäre jeder Einheit nur eine Achse zugeordnet, so könnte an jeder einzelnen Achse unabhängig Gleiten erkannt werden.

In Fig. 2 wird folglich Gleiten an der ersten Einheit I erkannt. Die anderen Einheiten II, III sind aktuell auf Grund einer geringen Bremskraftanforderung nicht gleitschutzgeregelt, an ihren Achsen wurde folglich kein Gleiten erkannt. Die Räder der Einheiten II, III sind deshalb nicht mit einem Kreuz markiert. An der einzigen gleitschutzgeregelten Einheit I wird nun der vorliegende Kraftschlusstyp ermittelt, in Fig. 2 entspricht dies dem Kraftschlusstyp xnH. Des Weiteren werden die Werte µ0 und Kµ0 ermittelt. Diese Schritte sind in Fig. 2 bezüglich der vertikalen Anordnung ungefähr mittig dargestellt. Daraufhin wird ein Graph für den Wert µ0 und ein Graph für den Wert Kµ0 gebildet. Diese Graphen entsprechen in vorliegender Darstellung einer (horizontal verlaufenden) Konstante. Die Verläufe der Graphen werden durch eine gestrichelte Linie dargestellt. Bei Kraftschlusstyp xnH liegt der Graph für den Wert µ0 über dem Graph für den Wert Kµ0. Der Wert Kµ0 entspricht, wie bereits weiter oben ausgeführt, dem Anteil der zur Verfügung stehenden Reibkraft (Adhäsionspotential), der für eine Bremsung nutzbar ist. Für jede Einheit II, III wird nun (in diesem Ausführungsbeispiel), basierend auf den Daten der einzigen gleitschutzgeregelten Einheit I, ein identischer Kraftschlusstyp xnH angenommen, mit einem identischen Verlauf des Diagramms Kraftschluss über Schlupf D1, D2, D3. Folglich wird für die Einheiten II, III der identische Wert für µ0 und Kµ0 angenommen, wie er für die Einheit I ermittelt wurde. Denn µ0 und Kµ0 können für eine Einheit I, II, III insbesondere dann ermittelt werden, wenn diese aktuell gleitschutzgeregelt ist.

Nun liegt, wie bereits erwähnt, aus dem an Einheit I ermittelten µ0 und Kµ0 ein konstanter Verlauf der Graphen vor, wodurch sich für die Einheiten II und III ein identisches µ0 und Kµ0 ergibt. Folglich ergibt sich für jede Einheit I, II, III ein identisches Diagramm Kraftschluss über Schlupf D1, D2, D3. In diesen Diagrammen Kraftschluss über Schlupf D1, D2, D3 für jede der Einheiten I, II, III ist außerdem auf der (vertikalen) Kraftschlussachse die aktuell abgerufene Bremsanforderung BA_I, BA_II, BA_III markiert. Für die Einheit I liegt die aktuell abgerufene Bremsanforderung BA_I über dem Wert µ0. Dies ist rückblickend auch der Grund, weshalb die Einheit I gleitet. Denn es wird eine höhere Bremsanforderung BA_I abgerufen, als der Reibwert µ0 erlaubt. Gemäß dieser ersten Ausführungsform wird nun die Bremsanforderung BA_I der Einheit I auf den Wert Kµ0 vermindert, und erfindungsgemäß werden außerdem auch die Bremsanforderungen BA_II der Einheit II und die Bremsanforderung BA_III der Einheit III auf den Wert Kµ0 geregelt, ohne dass an den Einheiten II, III Gleiten aufgetreten ist. Die aktuelle Bremsanforderung BA_II der Einheit II liegt unter Kµ0 und wird folglich erhöht (es liegt ein Bremskraftpotential F_Pot > 0 vor). Die aktuelle Bremsanforderung BA_III der Einheit III liegt über Kµ0 und wird folglich herabgesetzt (es liegt ein Bremskraftpotential F_Pot < 0 vor). Somit wird das optimale Kraftschlusspotential an allen Einheiten ausgenutzt. Die Einheit II kann stärker bremsen (Pfeil nach oben bei BA_II), ohne in den Zustand des Gleitens zu geraten. Bei der Einheit III hingehen wird Bremskraft reduziert (Pfeil nach unten bei BA-III), um der Gefahr des Gleitens vorzubeugen.

Gemäß einer nicht dargestellten zweiten Ausführungsform wird ein Herabsetzen der Bremskräfte grundsätzlich nicht vorgenommen. Die Bremsanforderung BA_I der Einheit I sowie die Bremsanforderung BA_III der Einheit III werden folglich nicht auf den Wert Kµ0 vermindert. Die Bremsanforderungen BA_II der Einheit II allerdings wird erfindungsgemäß auf den Wert Kµ0 geregelt, also erhöht, da ein Bremskraftpotential F_Pot > 0 vorliegt. Somit wird das optimale Kraftschlusspotential an allen Einheiten ausgenutzt, unter der Bedingung, dass an keiner der Einheiten I, II, III die Bremsanforderung herabgesetzt wird.

Gemäß einer nicht dargestellten dritten Ausführungsform erfolgt ein Herabsetzen der Bremskräfte bzw. der Bremsanforderungen BA_I, BA_II, BA_III lediglich optional. Gemäß dieser dritten Ausführungsform kann voreingestellt oder ausgewählt werden, ob ein Verfahren gemäß der obigen ersten Ausführungsform oder gemäß der obigen zweiten Ausführungsform ausgeführt wird.

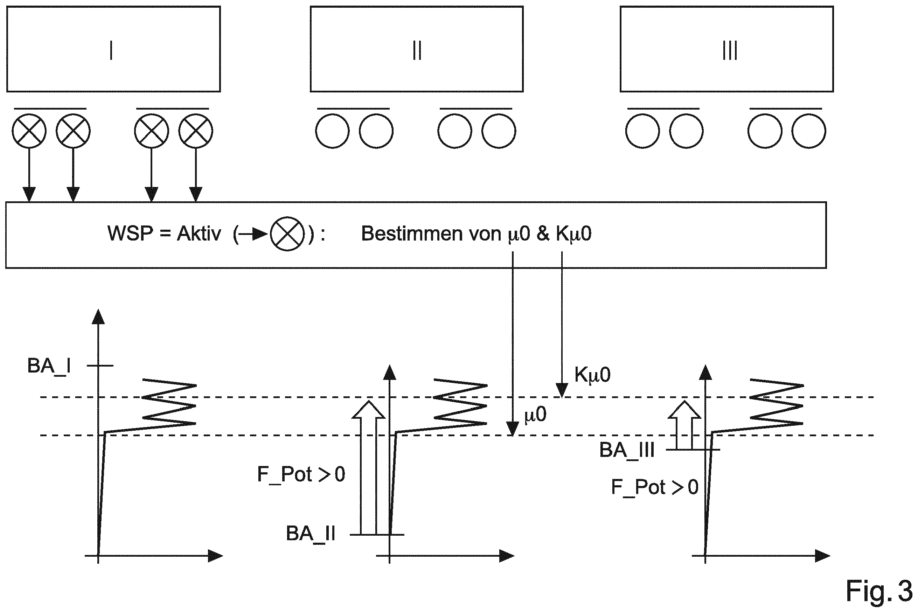

**Fig. 3** zeigt das Ausführungsbeispiel aus Fig. 2, wobei allerdings in dem in Fig. 3 gezeigten Zustand der Kraftschlusstyp nH an der einzigen gleitenden Einheit I ermittelt wurde. Folglich liegt in diesem Zustand der Wert Kµ0 über dem Wert µ0. Sowohl die aktuelle Bremsanforderung BA_II der Einheit II als auch die aktuelle Bremsanforderung BA_III der Einheit III liegt hier unter Kµ0, weshalb für beide Einheiten II, III die aktuelle Bremskraft erhöht werden kann (F_Pot > 0, Pfeile bei BA_II und BA_III nach oben).

Falls bei dem in Fig. 2 und Fig. 3 gezeigten Ausführungsbeispiel an mehreren Einheiten I, II, III Gleiten erkannt wird, dann wird zur Ermittlung der (konstanten) Graphen für Kµ0 und µ0 der Mittelwert aus den an den gleitenden Einheiten erfassten Werten für µ0 gebildet, und hieraus der konstante Graph für µ0 ermittelt bzw. für Kµ0 berechnet. Bei einem weiteren, nachfolgend gezeigten Ausführungsbeispiel wird lediglich dann ein konstanter Graph für Kµ0 und µ0 gebildet, wenn nur an einer der Einheiten I, II, III Gleiten erkannt wird. Falls an mehreren Einheiten I, II, III Gleiten erkannt wird, dann wird für Kµ0 und µ0 ein Graph gebildet, wie nachfolgend beschrieben.

Die Bezeichnungen der einzelnen Bauteile und die Zuordnung der Bauteile zu den Einheiten I, II, III bleibt bei den nachfolgend beschriebenen Ausführungsbeispielen unverändert.

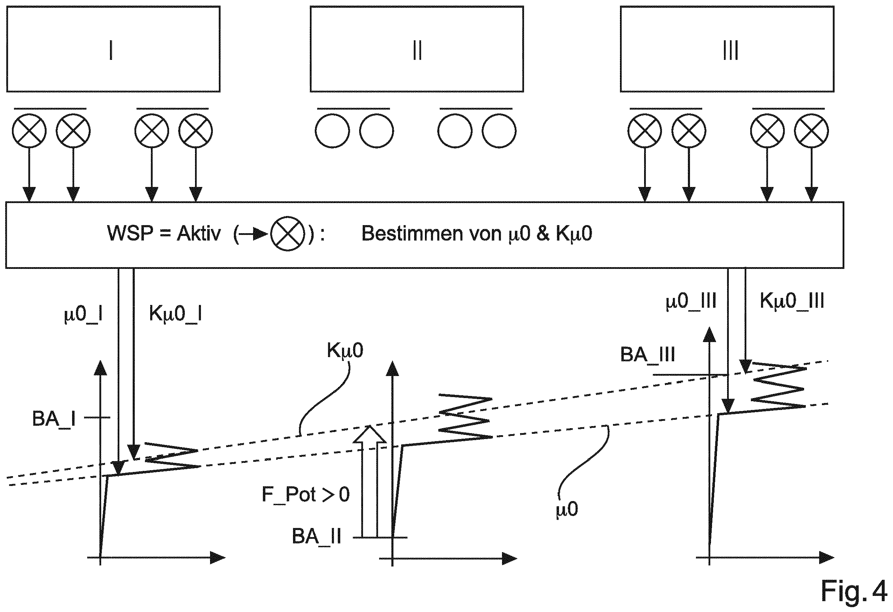

**Fig. 4** zeigt ein weiteres Ausführungsbeispiel, bei dem die Graphen für Kµ0 und µ0 nicht konstant sind, sondern linear (nach einer Funktion ersten Grades) verlaufen. Es wird in dem gezeigten Zustand an den Einheiten I und III Gleiten erkannt (mit Kreuz markierte Räder an den Einheiten I und III), folglich kann an den Einheiten I, III der aktuelle Kraftschlusstyp (hier nH) ermittelt werden, sowie die Werte µ0_I und Kµ0_I für Einheit I und µ0_III und Kµ0_III für Einheit III. Aus diesen Werten wird nun ein linear verlaufender Graph für µ0 gebildet, der die Werte µ0_I und µ0_III enthält. Außerdem wird ein linear verlaufender Graph für Kµ0 gebildet, der die Werte Kµ0_I und Kµ0_III enthält. Die aktuelle Bremsanforderung BA_II der Einheit II liegt hier unter dem Wert Kµ0 an der Stelle der Einheit II (Schnittpunkt des Graphen von Kµ0 mit der y-Achse der Einheit II), sodass die Bremsanforderung BA_II der Einheit II bis auf den Wert von Kµ0 an dieser Stelle erhöht wird (Pfeil bei BA_II nach oben), um das verfügbare Kraftschlusspotential auszunutzen.

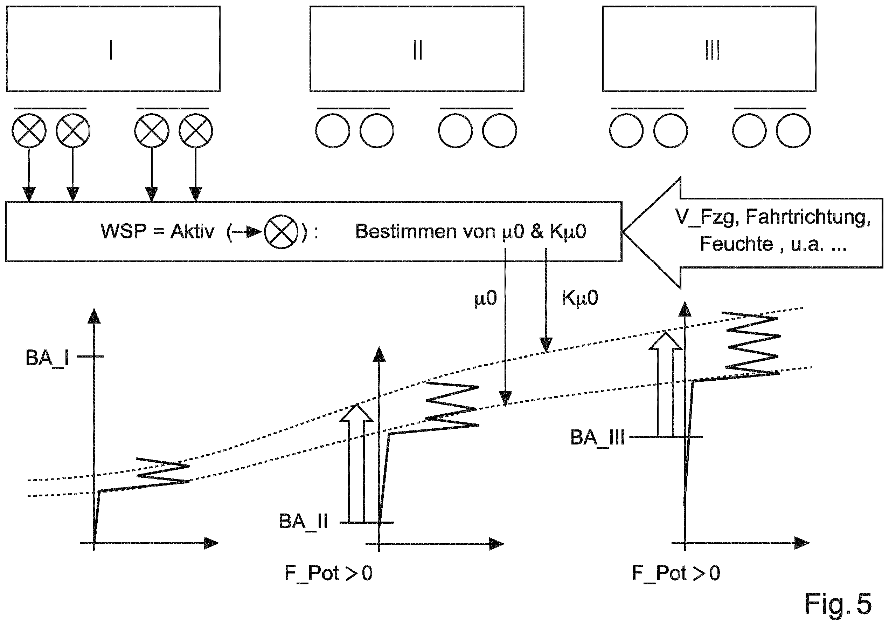

**Fig. 5** zeigt ein weiteres Ausführungsbeispiel, bei dem die Graphen für Kµ0 und µ0 weder konstant, noch linear sind, sondern nach einer Funktion wenigstens zweiten Grades verlaufen. Die weitere Konfiguration dieses Ausführungsbeispiels ist zu den bisher beschriebenen Ausführungsbeispielen identisch, insbesondere auch die Zuordnung der Bauteile zu den Einheiten I, II, III. Es wird in dem gezeigten Zustand an der Einheit I Gleiten erkannt (siehe die mit Kreuz markierten Räder bei Einheit I), folglich kann an der Einheit I der aktuelle Kraftschlusstyp (hier nH) ermittelt werden, sowie die Werte µ0 und Kµ0 für Einheit I. Zur Berechnung des Verlaufs des Graphen der Werte µ0 und Kµ0 werden in diesem Ausführungsbeispiel allerdings noch weiter Einflussfaktoren herangezogen, wie beispielsweise die Fahrzeuggeschwindigkeit V_Fzg, und/oder die Fahrtrichtung, und/oder die aktuelle Luftfeuchte, und/oder die aktuelle Feuchte der Schienen und/oder die Außentemperatur und/oder spezielle Fahrzeugeigenschaften (z.B. Masse, Achsabstände), usw. Durch das Hinzuziehen dieser weiteren Einflussfaktoren und den verwendeten Berechnungsmodus ergibt sich ein Verlauf der Graphen für µ0 und Kµ0, der weder konstant, noch linear ist, sondern einer Funktion wenigstens zweiten Grades folgt. Es wird ermittelt, dass die Bremsanforderungen BA_II und BA_III an den Einheiten II und III unter den jeweiligen Werten von Kµ0 liegt. Folglich werden die Bremsanforderungen BA_II und BA_III an den Einheiten II und III erhöht, bis auf jeweiligen Wert des Graphen von Kµ0 (Pfeil nach oben bei BA_II und BA_III).

Bei einem weiteren, nicht gezeigten Ausführungsbeispiel weisen die Verläufe der Graphen für µ0 und Kµ0 einen konstanten oder linearen Verlauf auf, obwohl weitere Einflussfaktoren, wie oben genannt, zur Berechnung des Verlaufs der Graphen hinzugezogen werden.

In einem weiteren, nicht gezeigten Ausführungsbeispiel werden die Graphen für µ0 und Kµ0 zu einem Zeitpunkt ermittelt, in dem keine der Einheiten im Makroschlupfbereich gleitet. Die Verläufe der Graphen werden dabei durch Messungen ermittelt, basierend auf einer oder mehrerer Steigungsbestimmung(en) von Kraftschluss über Schlupf mit darauffolgender Auswertung, beispielsweise aus einem hinterlegtem Kennlinienfeld.

### BEZUGSZEICHENLISTE

- nH: Kraftschlusstyp "niedriger Haftwert"
- xnH: Kraftschlusstyp "extrem niedriger Haftwert"
- µ0: Übergangspunkt von Mikro- nach Makroschlupf
- WSP: Wheel Slide Protection
- I, II, III: Einheiten
- X00: Aufbau der Einheit X
- 100: Aufbau der Einheit I (der ersten Einheit)
- XY0: Drehgestell Y von Einheit X
- 110: Drehgestell 1 von Einheit 1 (I)
- XYZ: Achse Z von Drehgestells Y der Einheit X
- 321: Achse 1 von Drehgestell 2 der Einheit 3 (III)
- D1: Diagramm Kraftschluss über Schlupf von Einheit 1 (I)
- D2: Diagramm Kraftschluss über Schlupf von Einheit 2 (II)
- D3: Diagramm Kraftschluss über Schlupf von Einheit 3 (III)

## Patentansprüche

1. Verfahren zur Aufrechterhaltung der Summenbremskraft eines Schienenfahrzeugs unter Berücksichtigung der zur Verfügung stehenden Kraftschlussverhältnisse, aufweisend die Schritte:
- Erkennen, dass wenigstens eine Einheit (I, II, III) gleitschutzgeregelt ist;
- Abrufen des an den gleitschutzgeregelten Einheiten (I, II, III) vorliegenden Kraftschlusstyps (nH, xnH);
- Ermitteln der Werte µ0 und Kµ0 für jede Einheit (I, II, III), die gleitschutzgeregelt ist, wobei µ0 und Kµ0 Größen der Adhäsion zwischen Schiene und Rad des Schienenfahrzeugs angeben;
- Bilden einer Funktion für den Wert µ0 und einer Funktion für den Wert Kµ0, jeweils über den gesamten Verlauf der Einheiten (I, II, III), also in Längenrichtung eines Schienenfahrzeugs, basierend auf den ermittelten Werten von µ0 und Kµ0 der gleitschutzgeregelten Einheiten (I, II, III);
- Vergleichen der aktuellen Bremsanforderung (BA_I, BA_II, BA-III) an jeder der Einheiten (I, II, III), also auch der nicht gleitschutzgeregelten Einheiten (I, II, III), mit dem Wert der Funktion von Kµ0 an der Stelle der jeweiligen Bremsanforderung (BA_I, BA_II, BA_III);
- Verändern jeder Bremsanforderung (BA_I, BA_II, BA_III) an jeder der Einheiten (I, II, III), also auch der nicht gleitschutzgeregelten Einheiten (I, II, III), hin zu dem jeweiligen Wert der Funktion von Kµ0 an der Stelle der jeweiligen Bremsanforderung (BA_I, BA_II, BA_III).

2. Verfahren gemäß dem vorhergehenden Anspruch, wobei
das Verändern jeder Bremsanforderung (BA_I, BA_II, BA_III) hin zu dem jeweiligen Wert der Funktion von Kµ0 nur bei solchen Bremsanforderung (BA_I, BA_II, BA_III) erfolgt, die hierdurch angehoben werden.

3. Verfahren gemäß einem der vorhergehenden Ansprüche, wobei
sowohl die Funktion für den Wert µ0 als auch die Funktion für den Wert Kµ0 jeweils konstant ist, gebildet durch den Mittelwert der jeweiligen Werte von µ0 bzw. Kµ0 an den gleitschutzgeregelten Einheiten (I, II, III).

4. Verfahren gemäß Anspruch 1, wobei
sowohl die Funktion für den Wert µ0 als auch die Funktion für den Wert Kµ0 linear ist, gebildet durch die jeweiligen Werte von µ0 bzw. Kµ0 von zwei gleitschutzgeregelten Einheiten (I, II, III).

5. Verfahren gemäß Anspruch 1, wobei
sowohl die Funktion für den Wert µ0 als auch die Funktion für den Wert Kµ0 eine Funktion wenigstens zweiten Grades ist, gebildet durch die jeweiligen Werte von µ0 bzw. Kµ0 von mehreren gleitschutzgeregelten Einheiten (I, II, III).

6. Verfahren gemäß einem der Ansprüche 1 oder 5, wobei
wenigstens eine der Funktionen der Werte für µ0 bzw. Kµ0 auf Grund von weiteren Einflussfaktoren, wie beispielsweise der Position des Schienenfahrzeugs, der Witterung, der Feuchte, der Geschwindigkeit, der Außentemperatur, der Fahrzeugparameter wie insbesondere der Fahrzeugmasse oder der Achsabstände, oder der Fahrtrichtung, angepasst wird.

7. Verfahren zur Aufrechterhaltung der Summenbremskraft eines Schienenfahrzeugs unter Berücksichtigung der zur Verfügung stehenden Kraftschlussverhältnisse, aufweisend die Schritte:
- Ermitteln einer Funktion für die Werte µ0 und Kµ0 basierend auf einer oder mehrerer Steigungsbestimmung(en) von Kraftschluss über Schlupf an wenigstens einer der Einheiten (I, II, III) mit darauffolgender Auswertung, ohne dass eine der Einheiten (I, II, III) gleitschutzgeregelt ist, wobei µ0 und Kµ0 Größen der Adhäsion zwischen Schiene und Rad des Schienenfahrzeugs angeben;
- Vergleichen der aktuellen Bremsanforderung (BA_I, BA_II, BA_III) an jeder der Einheiten (I, II, III) mit der Funktion des Werts Kµ0 an der Stelle der jeweiligen Bremsanforderung (BA_I, BA_II, BA_III);
- Verändern jeder Bremsanforderung (BA_I, BA_II, BA_III) an jeder der Einheiten (I, II, III) hin zu dem jeweiligen Wert der Funktion von Kµ0 an der Stelle der jeweiligen Bremsanforderung (BA_I, BA_II, BA_III).

8. Verfahren gemäß dem vorhergehenden Anspruch, wobei
das Verändern jeder Bremsanforderung (BA_I, BA_II, BA-III) hin zu dem jeweiligen Wert der Funktion von Kµ0 nur bei solchen Bremsanforderung (BA_I, BA_II, BA_III) erfolgt, die hierdurch angehoben werden.

9. Verfahren gemäß einem der vorhergehenden Ansprüche, aufweisend die zusätzlichen Schritte:
- Ermitteln, dass ein Ausgleichen einer geforderten Summenbremskraft aller Einheiten (I, II, III) basierend auf den vorhergehenden Verfahren nicht möglich ist, auf Grund von temporär unzureichenden Adhäsions- bzw. Reibungsverhältnissen zwischen Rad und Schiene;
- Anheben der geforderten Summenbremskraft aller Einheiten (I, II, III), sodass ein Kompensieren eines verlorenen Bremswegs zu einem späteren Zeitpunkt möglich ist, wenn die Adhäsions- bzw. Reibungsverhältnisse hierfür geeignet sind.

10. Vorrichtung zum Ausführen eines Verfahrens gemäß einem der vorhergehenden Ansprüche.

11. Verwendung einer Vorrichtung gemäß des vorhergehenden Anspruchs zum Ausführen eines Verfahrens gemäß einem der Ansprüche 1 bis 9.

## Claims

1. A method for maintaining the total braking force of a rail vehicle taking into account the available adhesion conditions, involving the following steps:
- recognition that at least one unit (I, II, III) is wheel-slide-controlled;
- retrieval of the type of adhesion (nH, xnH) prevailing at the wheel-slide-controlled units (I, II, III);
- determination of the values µ0 and Kµ0 for each unit (I, II, III) that is wheel-slide-controlled, µ0 and Kµ0 indicating adhesion values between rail and rail vehicle wheel;
- formation of a function for the value µ0 and a function for the value Kµ0, in each case over the entire length of the unit (I, II, III), i.e. in the longitudinal direction of a rail vehicle, based on the values determined for µ0 and Kµ0 for the wheel-slide-controlled units (I, II, III);
- comparison of the current braking request (BA_I, BA_II, BA-III) at each of the units (I, II, III), i.e. including the non-wheel-slide-controlled units (I, II, III), with the value of the function of Kµ0 at the point of the corresponding braking request (BA_I, BA_II, BA_III);
- adjustment of each braking request (BA_I, SA_II, BA-III) at each of the units (I, II, III), i.e. including the non-wheel-slide-controlled units (I, II, III), towards the value of the function of Kµ0 at the point of the corresponding braking request (BA_I, SA_II, BA_III).

2. A method according to the preceding claim,
adjustment of each braking request (BA_I, SA_II, BA-III) towards the value of the function of Kµ0 taking place only for those braking requests (BA_I, SA_II, BA-III) that are increased by this adjustment.

3. A method according to any one of the preceding claims,
both the function for the value µ0 and the function for the value Kµ0 being constant, formed by the mean value of the respective values of µ0 and Kµ0 at the wheel-slide-controlled units (I, II, III).

4. A method according to claim 1,
both the function for the value µ0 and the function for the value Kµ0 being linear, formed by the respective values of µ0 and Kµ0 of two wheel-slide-controlled units (I, II, III).

5. A method according to claim 1,
both the function for the value µ0 and the function for the value Kµ0 being at least second-degree functions, formed by the respective values of µ0 and Kµ0 of a plurality of wheel-slide-controlled units (I, II, III).

6. A method according to either of claims 1 or 5,
at least one of the functions of the values for µ0 and Kµ0 being adapted on the basis of further factors of influence such as, for example, the position of the rail vehicle, the weather, the humidity, the velocity, the exterior temperature and vehicle parameters such as, in particular, vehicle mass, axle spacing or direction of travel.

7. A method for maintaining the total braking force of a rail vehicle taking into account the available adhesion conditions, involving the following steps:
- determination of a function for the values µ0 and Kµ0 based on one or more gradient determinations of adhesion against slip at at least one of the units (I, II, III) with subsequent evaluation, none of the units (I, II, III) being wheel-slide-controlled, µ0 and Kµ0 indicating adhesion values between rail and rail vehicle wheel;
- comparison of the current braking request (BA_I, SA_II, BA-III) at each of the units (I, II, III), with the function of Kµ0 at the point of the corresponding braking request (BA_I, SA_II, BA_III);
- modification of each braking request (BA_I, SA_II, BA-III) at each of the units (I, II, III) towards the value of the function of Kµ0 at the point of the corresponding braking request (BA_I, BA_II, BA_III);
- adjustment of each braking request (BA_I, SA_II, BA-III) at each of the units (I, II, III) towards the value of the function of Kµ0 at the point of the corresponding braking request (BA_I, SA_II, BA_III).

8. A method according to the preceding claim,
adjustment of each braking request (BA_I, BA_II, BA-III) towards the value of the function of Kµ0 taking place only for those braking requests (BA_I, SA_II, BA-III) that are increased by this modification.

9. A method according to any one of the preceding claims, involving the following additional steps:
- determination that equalization of a requested total braking force of all units (I, II, III) based on the preceding methods is impossible due to temporarily inadequate adhesion or friction conditions between wheel and rail;
- increasing of the requested total braking force of all units (I, II, III) such that compensation for a lost braking distance is possible at a later point in time when the adhesion and friction conditions are suitable.

10. A device for carrying out a method according to one of the preceding claims.

11. A use of a device according to the preceding claim for carrying out a method according to any one of claims 1 to 9.

## Revendications

1. Procédé de maintien de la force de freinage somme d'un véhicule ferroviaire, en tenant compte des rapports d'adhérence disponibles, comportant les stades :
- reconnaissance qu'au moins une unité (I, II, III) est anti-enrayée ;
- appel du type (nH, xnH) d'adhérence présent sur les unités (I, II, III) anti-enraysées ;
- détermination des valeurs µ0 et Kµ0 pour chaque unité (I, II, III), qui est anti-enrayée, µ0 et Kµ0 indiquant des grandeurs de l'adhérence entre rail et roue du véhicule ferroviaire ;
- formation d'une fonction pour la valeur µ0 et d'une fonction pour la valeur Kµ0, chacune sur tout le tracé des unités (I, II, III), donc dans la direction longitudinale d'un véhicule ferroviaire, reposant sur les valeurs déterminées de µ0 et Kµ0 des unités (I, II, III) anti-enrayées ;
- comparaison des demandes (BA_I, BA_II, BA_III) de freinage en cours sur chacune des unités (I, II, III), donc également sur les unités (I, II, III) non anti-enrayées, à la valeur de la fonction Kµ0 au point de la demande (BA_I, BA_II, BA_III) de freinage respective ;
- modification de chaque demande (BA_I, BA_II, BA_III) de freinage sur chacune des unités (I, II, III), donc également sur les unités (I, II, III) non anti-enrayées, vers la valeur respective de la fonction Kµ0 au point de la demande (BA_I, BA_II, BA_III) de freinage respective.

2. Procédé suivant la revendication précédente, dans lequel
on n'effectue la modification de chaque demande (BA_I, BA_II, BA_III) de freinage vers la valeur respective de la fonction Kµ0 que pour les demandes (BA_I, BA_II, BA_III) de freinage, qui sont ainsi relevées.

3. Procédé suivant l'une des revendications précédentes, dans lequel
tant la fonction pour la valeur µ0, qu'également la fonction pour la valeur Kµ0 sont chacune constante, en étant formée par la moyenne des valeurs respectives de µ0 et de Kµ0 sur les unités (I, II, III) anti-enrayées.

4. Procédé suivant la revendication 1, dans lequel
tant la fonction pour la valeur µ0, qu'également la fonction pour la valeur Kµ0 est linéaire, en étant formée par les valeurs respectives de µ0 et Kµ0 de deux unités (I, II, III) anti-enrayées.

5. Procédé suivant la revendication 1, dans lequel
tant la fonction pour la valeur µ0, qu'également la fonction pour la valeur Kµ0 est une fonction au moins du deuxième degré, en étant formée par les valeurs respectives de µ0 et de Kµ0 de plusieurs unités (I, II, III) anti-enrayées.

6. Procédé suivant l'une des revendications 1 ou 5, dans lequel
on adapte au moins l'une des fonctions des valeurs pour µ0 et Kµ0 sur la base d'autres paramètres, comme par exemple la position du véhicule ferroviaire, les intempéries, l'humidité, la vitesse, la température extérieure, le paramètre du véhicule, comme notamment la masse du véhicule ou la distance entre essieux ou le sens de marche.

7. Procédé de maintien de la force de freinage somme d'un véhicule ferroviaire, en tenant compte des rapports d'adhérence disponibles, comportant les stades :
- détermination d'une fonction pour les valeurs µ0 et Kµ0 reposant sur une ou plusieurs déterminations de pente d'adhérence par glissement sur au moins l'une des unités (I, II, III) avec exploitation qui s'ensuit, sans que l'une des unités (I, II, III) soit anti-enrayée, µ0 et Kµ0 indiquant des grandeurs de l'adhérence entre rail et roue du véhicule ferroviaire ;
- comparaison des demandes (BA_I, BA_II, BA_III) de freinage en cours sur chacune des unités (I, II, III) à la fonction de la valeur Kµ0 au point de la demande (BA_I, BA_II, BA_III) de freinage respectif ;
- modification de chaque demande (BA_I, BA_II, BA_III) de freinage sur chacune des unités (I, II, III) vers la valeur respective de la fonction Kµ0 au point de la demande (BA_I, BA_II, BA_III) de freinage respective.

8. Procédé suivant la revendication précédente, dans lequel
on n'effectue la modification de chaque demande (BA_I, BA_II, BA_III) de freinage vers la valeur respective de la fonction Kµ0 que pour les demandes (BA_I, BA_II, BA_III) de freinage, qui sont ainsi relevées.

9. Procédé suivant l'une des revendications précédentes, comportant les stades supplémentaires :
- détermination qu'une comparaison d'une force de freinage somme exigée de toutes les unités (I, II, III) sur la base du procédé précédent n'est pas possible, en raison de rapports d'adhérence ou de frottement temporairement insuffisants entre rail et roue ;
- relevé de la force de freinage somme exigée de toutes les unités (I, II, III) de manière à rendre possible, à un instant ultérieur, une compensation d'un trajet de freinage perdu, si les rapports d'adhérence ou de frottement sont appropriés à cela.

10. Installation pour effectuer un procédé suivant l'une des revendications précédentes.

11. Utilisation d'une installation suivant la revendication précédente, pour effectuer un procédé suivant l'une des revendications 1 à 9.
